# EUROPÄISCHE PATENTANMELDUNG

(11) **EP 4 186 950 A1**
(43) Veröffentlichungstag der Anmeldung: **31.05.2023**
(21) Anmeldenummer: 21210729.6
(22) Anmeldetag: 26.11.2021
(51) Int. Cl.: C09D 5/00

(54) **VERWENDUNG EINER METALLEFFEKTPIGMENTE ENTHALTENDEN LACKFORMULIERUNG ZUM LACKIEREN EINES MIT EINEM RADARSENSOR UND EINEM LIDARSENSOR AUSGESTATTETEN FAHRZEUGS**

(71) Anmelder: Schlenk Metallic Pigments GmbH, 91154 Roth (DE)
(72) Erfinder: Huber, Adalbert, 64625 Bensheim (DE); Stöter, Matthias, 90518 Altdorf bei Nürnberg (DE); Webler, Ralf, 90453 Nürnberg (DE)
(74) Vertreter: Müller-Boré & Partner Patentanwälte PartG mbB

(57) **Zusammenfassung**

Die vorliegende Erfindung betrifft die Verwendung einer Metalleffektpigmente enthaltenden Lackformulierung zum Lackieren eines mit einem Radarsensor und einem Lidarsensor ausgestatteten Fahrzeugs, wobei die Metalleffektpigmente ein Metallsubstrat, das gegebenenfalls passiviert ist und das mit zumindest einer dielektrischen Schicht umhüllt ist, umfassen, wobei die Metalleffektpigmente eine mittlere Pigmentdicke von 20 nm bis 2000 nm aufweisen und die relative Standardabweichung der mittleren Pigmentdicke höchstens 40% beträgt.

## Beschreibung

Die vorliegende Erfindung betrifft die Verwendung einer Metalleffektpigmente enthaltenden Lackformulierung zum Lackieren eines mit einem Radarsensor und einem Lidarsensor ausgestatteten Fahrzeugs.

Moderne Fahrzeuge, insbesondere Kraftfahrzeuge, sind mit einer Reihe von Sensoren ausgestattet, die das Steuern des Fahrzeugs erleichtern und zugleich auch die Sicherheit der Insassen erhöhen sollen. Bei selbstfahrenden Kraftfahrzeugen, an denen vielfach mit Hochdruck geforscht wird, sind derartige Sensoren unabdingbar. Neben Kameras, welche auf herkömmliche Weise die Umgebung des Fahrzeugs aufzeichnen, sind dies vor allem Radar- und Lidarsensoren.

Radarsensoren werden eingesetzt, um Objekte in der Umgebung, wie andere Fahrzeuge oder Fußgänger, zu erfassen und deren Abstand zum Fahrzeug sowie deren Relativgeschwindigkeiten zu messen. Radar ist das Akronym für "radio detection and ranging" und meint also die funkgestützte Erfassung und Abstandsmessung. Der Radarsensor ist demnach ein auf elektromagnetischer Strahlung basierender Sensor. Funkwellen werden von einer Strahlungsquelle ausgesendet und die von Objekten in der Umgebung reflektierten Funkwellen werden durch den Radarsensor registriert. Die hierbei gemessenen Werte werden in elektrische Signale umgerechnet, die schließlich in speziellen Steuergeräten ausgewertet werden. Radarsensoren arbeiten überwiegend im Frequenzbereich von 76 GHz bis 81 GHz, wobei grundsätzlich auch andere Frequenzbereiche in Frage kommen.

Demgegenüber ist der Lidarsensor ein auf elektromagnetischer Strahlung basierender Sensor, welcher Lichtwellen zur Messung von Abständen und Geschwindigkeiten nutzt. Lidar ist das Akronym für "*li*ght detection and ranging" und meint also die lichtgestützte Erfassung und Abstandsmessung. Die von einer Strahlungsquelle ausgesendeten Lichtwellen werden von Objekten im Sichtfeld reflektiert. Aus der sogenannten Lichtlaufzeit, d.h. der Zeit, welche das Licht zum Durchlaufen einer bestimmten Strecke benötigt, wird die Entfernung berechnet. Die hierbei gemessenen Werte werden wie beim Radarsensor in elektrische Signale umgerechnet, die schließlich in speziellen Steuergeräten ausgewertet werden. Lidarsensoren arbeiten überwiegend mit Nahinfrarotlicht bei einer Wellenlänge von 905 nm, wobei grundsätzlich auch andere Wellenlängen in Frage kommen.

Im Vergleich zu Lidarsensoren sind Radarsensoren unempfindlicher gegenüber Witterungseinflüssen wie beispielsweise Regen, Schneefall oder Nebel. Allerdings können schräge Reflexionsflächen das Messergebnis beeinflussen. In modernen Fahrzeugen sind daher häufig sowohl Radar- als auch Lidarsensoren verbaut, um sich die Vorteile beider Sensortypen zunutze zu machen. Lidarsensoren müssen nach außen hin frei liegen und sind meist am Stoßfänger montiert. Der Grund hierfür ist, dass Fahrzeuglackierungen Lichtstrahlen entweder absorbieren oder reflektieren, jedoch nicht transmittieren. Folglich lassen sich Lidarsensoren nicht hinter Blenden im Fahrzeug, welche typischerweise aus Kunststoff gefertigt und mit der Fahrzeuglackierung versehen sind, montieren. Funkstrahlen können hingegen nichtleitende Materialien wie etwa Kunststoff durchdringen. Aus ästhetischen Gründen werden Radarsensoren daher meist hinter solchen Blenden im Fahrzeug montiert. Allerdings dürfen solche Blenden, einschließlich der hierauf befindlichen Fahrzeuglackierung, gegenüber Funkstrahlen nicht zu stark dämpfend sein.

Formulierungen zum Lackieren eines mit einem Radarsensor und einem Lidarsensor ausgestatteten Fahrzeugs müssen für eine möglichst genaue Erfassung und Abstandsmessung also eine ausreichend hohe Transmission gegenüber Funkwellen und zugleich eine ausreichend hohe Reflektivität gegenüber Lichtwellen aufweisen.

Weiterhin müssen entsprechende Lackformulierungen auch über eine bestimmte Farbgebung, auch als Koloristik bezeichnet, verfügen. So wünschen viele Kunden Fahrzeuglackierungen mit einem vorgegebenen Farbton, der zugleich hell und bunt erscheinen soll. Die Fahrzeuglackierung muss neben dem vorgegebenen Farbton also auch eine ausreichend hohe Helligkeit und eine ausreichend hohe Buntheit aufweisen. Als besonders ansprechend wird zudem eine Fahrzeuglackierung wahrgenommen, bei der das in der Lackformulierung enthaltene Pigment zu einem Metalleffekt führt. In anderen Worten muss also auch der Helligkeitsflop ausreichend hoch sein. Ferner bedarf die Fahrzeuglackierung eines ausreichend hohen Deckvermögens. Ist das Deckvermögen nicht ausreichend hoch, muss die Lackformulierung mit einer entsprechend größeren Schichtdicke auf das Fahrzeug appliziert werden, was neben höheren Kosten bei der Lackierung auch zu einer Gewichtszunahme des Fahrzeugs führt.

Im Stand der Technik wird zur Erhöhung des Deckvermögens den Lackformulierungen häufig Ruß zugesetzt. Dies geht jedoch mit einem Verlust der Helligkeit einher. Auch verringert sich hierdurch die Reflektivität gegenüber Lichtwellen, was sich nachteilig auf die Messgenauigkeit des Lidarsensors auswirkt. Um ein ausreichend hohes Deckvermögen zu erzielen, lässt sich auch der Anteil der in der Lackformulierung enthaltenen Pigmente, welche für den Metalleffekt verantwortlich sind, erhöhen. Allerdings verringert sich hierdurch die Transmission gegenüber Funkwellen, was sich wiederum nachteilig auf die Messgenauigkeit des Radarsensors auswirkt. Der Grund hierfür ist, dass die in der Lackformulierung enthaltenen Pigmente, welche für den Metalleffekt verantwortlich sind, einen metallischen Kern aufweisen. Aufgrund der vergleichsweise hohen Polarisationsfähigkeit von Metallen in elektrischen Feldern kommt es bei Zunahme ihres Anteils folglich zu einer Dämpfung der Funkwellen. Zwar ließen sich für die Lackformulierung auch Pigmente einsetzen, welche keinen metallischen Kern aufweisen, also dielektrisch sind. Beispielhaft sind hier Perlglanzpigmente genannt, welche in der Regel ein Glimmer- oder Glassubstrat umfassen. Der Einsatz solcher Pigmente läuft jedoch dem Metalleffekt zuwider. Ferner lässt sich mit Perlglanzpigmenten kein ausreichend hohes Deckvermögen erzielen. Den entsprechenden Lackformulierungen muss demnach Ruß zugesetzt werden. Wie eingangs erwähnt, führt dies zu einem Helligkeitsverlust und verringert zudem die Reflektivität gegenüber Lichtwellen.

Insofern besteht ein Bedarf an neuen Ansätzen, um die vorstehend beschriebenen Nachteile, wie sie bei Lackformulierungen aus dem Stand der Technik auftreten, zu überwinden. Der vorliegenden Erfindung liegt somit die Aufgabe zugrunde, Maßnahmen bereitzustellen, welche den Anforderungen an eine Lackformulierung im Hinblick auf deren Verwendung zum Lackieren eines mit einem Radarsensor und einem Lidarsensor ausgestatteten Fahrzeugs genügen, ohne sich nachteilig auf die Koloristik und das Deckvermögen auszuwirken.

Gelöst wird die vorstehende Aufgabe durch die in den Ansprüchen gekennzeichneten Ausführungsformen der vorliegenden Erfindung.

So wird gemäß der vorliegenden Erfindung die Verwendung einer Metalleffektpigmente enthaltenden Lackformulierung zum Lackieren eines mit einem Radarsensor und einem Lidarsensor ausgestatteten Fahrzeugs bereitgestellt, wobei die Metalleffektpigmente ein Metallsubstrat, das gegebenenfalls passiviert ist und das mit zumindest einer dielektrischen Schicht umhüllt ist, umfassen, wobei die Metalleffektpigmente eine mittlere Pigmentdicke von 20 nm bis 2000 nm aufweisen und die relative Standardabweichung der mittleren Pigmentdicke höchstens 40% beträgt.

Die gemäß der vorliegenden Erfindung verwendete Lackformulierung erlaubt das kostengünstige Lackieren eines mit einem Radarsensor und einem Lidarsensor ausgestatteten Fahrzeugs, wobei die aus der Lackformulierung hervorgehende Fahrzeuglackierung neben einer ausreichend hohen Reflektivität gegenüber Lichtwellen und einer ausreichend hohen Transmission gegenüber Funkwellen auch durch eine ausreichend hohe Helligkeit und durch eine ausreichend hohe Buntheit mit einem ausreichend hohen Helligkeitsflop bei einem ausreichend hohen Deckvermögen gekennzeichnet ist. Zurückzuführen ist dies auf die in der Lackformulierung enthaltenen Metalleffektpigmente, welche spezifische geometrische Eigenschaften aufweisen.

Gemäß der vorliegenden Erfindung enthält die Lackformulierung Metalleffektpigmente. Im Gegensatz zu Perlglanzpigmenten mit ihrem Glimmer- oder Glassubstrat umfassen Metalleffektpigmente ein Metallsubstrat. Metalleffektpigmente weisen also einen metallischen Kern auf. Aufgrund dessen lässt sich mit Metalleffektpigmenten im Vergleich zu Perlglanzpigmenten ein höheres Deckvermögen erzielen. Gegebenenfalls ist das Metallsubstrat passiviert. Es kann beispielsweise mit einer nativen Oxidschicht überzogen sein.

Was das Material anbelangt, ist das Metallsubstrat vorliegend nicht weiter eingeschränkt. Beispielsweise kann das Metallsubstrat aus Metallen wie Eisen, Aluminium, Kupfer, Nickel, Chrom, Zink, Zinn, Silber, Gold, Platin, Kobalt, Lanthaniden und Titan sowie aus Mischungen oder Legierungen derselben, darunter Stahl, insbesondere Edelstahl, sein. In einer bevorzugten Ausführungsform ist das Metallsubstrat aus Aluminium.

Gemäß der vorliegenden Erfindung ist das Metallsubstrat mit zumindest einer dielektrischen Schicht umhüllt. Allgemein ist es ausreichend, wenn nur ein Teil der Oberfläche des Metallsubstrats mit der zumindest einen dielektrischen Schicht überzogen ist. So kann beispielsweise lediglich eine der beiden Hauptflächen des Metallsubstrats mit der zumindest einen dielektrischen Schicht überzogen sein. Zudem können auch die Seitenflächen des Metallsubstrats ausgespart sein. Gemäß der vorliegenden Erfindung ist jedoch die gesamte Oberfläche des gegebenenfalls passivierten Metallsubstrats mit der zumindest einen dielektrischen Schicht überzogen, weswegen vorliegend auch von einem Umhüllen die Rede ist. Dies trägt nicht nur zu einer Verbesserung der Koloristik bei, sondern erhöht auch die mechanische und chemische Beständigkeit der Metalleffektpigmente. Ist mehr als eine dielektrische Schicht vorhanden, umhüllt jede der dielektrischen Schicht die darunter liegende dielektrische Schicht sowie das darunter liegende Metallsubstrat.

Die zumindest eine dielektrische Schicht ist aus einem Dielektrikum. In der Regel handelt es sich hierbei um (Halb-)Metalloxide wie etwa Siliziumdioxid (SiO₂) oder Aluminiumoxid (Al₂O₃), welche mit einem Brechungsindex n ≤ 1,8 als niedrigbrechend gelten, und um (Halb-)Metalloxide wie etwa Eisen(III)oxid (Fe₂O₃), Titan(IV)oxid (TiO₂), Zinn(IV)oxid (SnO₂), Chrom(III)oxid (Cr₂O₃) oder Cobalt(III)oxid (Co₂O₃), welche mit einem Brechungsindex n > 1,8 als hochbrechend gelten, ohne jedoch hierauf beschränkt zu sein. So können auch andere niedrig- und/oder hochbrechende Dielektrika eingesetzt werden. Durch geeignete Auswahl des Dielektrikums der zumindest einen dielektrischen Schicht kann ein wunschgemäßer Farbton eingestellt werden, wobei neben dem Brechungsindex des Dielektrikums auch dessen Schichtdicke Einfluss auf die Koloristik hat. Bei passend eingestellter Schichtdicke der zumindest einen dielektrischen Schicht kommt es zu einer Interferenz im sichtbaren Spektralbereich, bedingt durch die Reflexion des einfallenden Lichts an den Grenzflächen der zumindest einen dielektrischen Schicht. Bei derartigen Metalleffektpigmenten, welche auch als Interferenzpigmente bezeichnet werden, beträgt die Schichtdicke der zumindest einen dielektrischen Schicht typischerweise mindestens 20 nm. Für die Interferenz und damit auch für die Koloristik sind maßgeblich die hochbrechenden Dielektrika verantwortlich. Zum Einstellen eines wunschgemäßen Farbtons kann eine einzelne dielektrische Schicht auch aus verschiedenen (hochbrechenden) Dielektrika sein. Beispielhaft ist hier eine dielektrische Schicht aus Eisen(III)oxid und Titan(IV)oxid genannt. Sinngemäß spricht man bei dieser von einer Mischschicht.

In Interferenzpigmenten trägt das Metallsubstrat aufgrund der an der Substratoberfläche stattfindenden Reflexion zur Interferenz bei, was bei Perlglanzpigmenten mit ihrem Glimmer- oder Glassubstrat naturgemäß nicht der Fall ist.

Das Aufbringen der zumindest einen dielektrischen Schicht auf das gegebenenfalls passivierte Metallsubstrat kann durch hydrolytische Zersetzung geeigneter Vorläuferverbindungen, wie beispielsweise Tetraethylorthosilikat (Si(OC₂H₅)₄), Eisen(III)chlorid (FeCl₃) oder Eisen(III)nitrat (Fe(NO₃)₃), gegebenenfalls mit anschließendem Tempern, erfolgen. Auch kann die zumindest eine dielektrische Schicht durch Gasphasenzersetzung einer geeigneten Vorläuferverbindung, wie beispielsweise Di-*tert*-butoxy-diacetoxysilan (Si(OC(CH₃)₃)₂(OCOCH₃)₂) oder Eisenpentacarbonyl (Fe(CO)s), aufgebracht werden. Das diesbezügliche Vorgehen ist dem Fachmann hinlänglich aus dem Stand der Technik bekannt.

In EP 1 114 103 B1 wird beispielsweise zunächst eine dielektrische Schicht aus Siliziumdioxid mit Natronwasserglas auf ein Metallsubstrat aus Aluminium aufgebracht. Anschließend erfolgt eine nasschemische Beschichtung mit Eisen(III)oxid unter Verwendung von Eisen(III)chlorid. Ferner ist in EP 1 114 103 B1 die Beschichtung mit Titan(IV)oxid und Zinn(IV)oxid beschrieben. Aus EP 0 708 154 B1 ist wiederum ein Herstellungsverfahren bekannt, das eine Kombination aus hydrolytischer Zersetzung und Gasphasenzersetzung zum Aufbringen der dielektrischen Schichten anwendet. So wird ein Metallsubstrat aus Aluminium zunächst nasschemisch unter Verwendung von Ammoniak als Base mit Siliziumdioxid beschichtet, wobei Tetraethylorthosilikat als Vorläuferverbindung dient. Nach Trocknen des so beschichten Metallsubstrats findet in einem Wirbelbettreaktor die Beschichtung mit Eisen(III)oxid statt, wobei Eisenpentacarbonyl als Vorläuferverbindung dient. Alternativ lassen sich hier jedoch auch beide dielektrischen Schichten im Wirbelbettreaktor aufbringen, wobei dann neben Eisenpentacarbonyl Di-*tert*-butoxy-diacetoxysilan als Vorläuferverbindung dient. Aus WO 2013/175339 A1 ist schließlich ein rein nasschemischer Prozess zur Beschichtung von Metallsubstraten aus Aluminium mit Eisen(III)oxid unter Verwendung von Eisen(III)nitrat bekannt. Rein nasschemische Prozesse sind zudem in WO 2015/014484 A1 und WO 2020/038684 A1 beschrieben.

In einer spezifischen Ausführungsform umfassen die Metalleffektpigmente ein gegebenenfalls passiviertes Metallsubstrat aus Aluminium, das mit einer dielektrischen Schicht aus Siliziumdioxid und mit einer dielektrischen Schicht aus Eisen(III)oxid in dieser Reihenfolge umhüllt ist. Anstelle der dielektrischen Schicht aus Eisen(III)oxid kann auch eine dielektrische Schicht aus Eisen(III)oxid und Titan(IV)oxid, also eine Mischschicht, auf der dielektrischen Schicht aus Siliziumdioxid aufgebracht sein. Zudem können die entsprechenden niedrig- und hochbrechenden dielektrischen Schichten auch alternierend auf dem Metallsubstrat aufgebracht sein.

Bei Bedarf lassen sich die Metalleffektpigmente mit einer Oberflächenbeschichtung versehen. Ohne hierauf beschränkt zu sein, kann die Oberflächenbeschichtung aus organischen Polymeren, Silanen oder Siloxanen sein. Durch Aufbringen einer derartigen Oberflächenbeschichtung auf die zumindest eine dielektrische Schicht, wobei man auch von einer Oberflächenfunktionalisierung spricht, lässt sich die mechanische und chemische Beständigkeit der Metalleffektpigmente weiter erhöhen. Das diesbezügliche Vorgehen ist unter anderem in WO 2015/044188 A1 und EP 2 318 463 B1 ausführlich beschrieben.

Gemäß der vorliegenden Erfindung weisen die Metalleffektpigmente eine mittlere Pigmentdicke von 20 nm bis 2000 nm, bevorzugt 50 nm bis 1700 nm und noch mehr bevorzugt 200 nm bis 1500 nm, auf. Der Begriff "Pigmentdicke" meint vorliegend die Dicke des gesamten Metalleffektpigments, also einschließlich der Dicke der zumindest einen dielektrischen Schicht sowie der Dicke einer gegebenenfalls darauf aufgebrachten Oberflächenbeschichtung.

Die mittlere Pigmentdicke wird durch Ausmessen auf Grundlage rasterelektronenmikroskopischer (REM) Aufnahmen bestimmt. Hierbei wird wie folgt vorgegangen: Die in Pulverform vorliegenden Metalleffektpigmente werden in einem Lack auf Basis von Nitrocellulose dispergiert und auf eine Aluminiumfolie appliziert. Das Mischungsverhältnis zwischen Pulver und Lack im flüssigen System beträgt 1:10. Ein Abschnitt von 1 cm² der so lackierten Aluminiumfolie wird für die Erstellung eines Querschnitts unter Verwendung einer Breitstrahl-Ionenquelle durch Bestrahlung mit hochenergetischen Ar-Ionen herausgetrennt. Für eine hinreichende Leitfähigkeit wird der herausgetrennte Querschnitt noch mit einer 5 nm dünnen Kohlenstoffschicht besputtert. Anschließend werden die Metalleffektpigmente im Querschnitt unter Verwendung eines Rasterelektronenmikroskops bei Vergrößerungen im Bereich von 10000x bis 30000x abgebildet. Von mindestens 500 unterschiedlichen Metalleffektpigmenten wird die Pigmentdicke bestimmt. Die mittlere Pigmentdicke stellt sodann das arithmetische Zahlenmittel der bestimmten Pigmentdicken dar.

Die relative Standardabweichung der mittleren Pigmentdicke beträgt gemäß der vorliegenden Erfindung höchstens 40%, bevorzugt höchstens 20% und noch mehr bevorzugt höchstens 10%. Die relative Standardabweichung, auch Variationskoeffizient genannt, setzt die absolute Standardabweichung ins Verhältnis zu der aus mindestens 500 unterschiedlichen Metalleffektpigmenten bestimmten mittleren Pigmentdicke. Die relative Standardabweichung der mittleren Pigmentdicke ist also ein Maß für die Dickenschwankung der Metalleffektpigmente. Hierbei gilt, dass je kleiner die relative Standardabweichung ist, desto geringer ist die Dickenschwankung der Metalleffektpigmente.

Was die Größe der Metalleffektpigmente, also ihren Pigmentdurchmesser, anbelangt, ist die vorliegende Erfindung nicht weiter eingeschränkt. Typischerweise weisen die Metalleffektpigmente einen Pigmentdurchmesser dso im Bereich von 3 µm bis 100 µm, beispielsweise im Bereich von 5 µm bis 50 µm oder im Bereich von 10 µm bis 30 µm, auf. Beim Pigmentdurchmesser handelt es sich vorliegend um den sogenannten dso. Dieser gibt den Wert an, bei dem 50% der Metalleffektpigmente aus einer Stichprobe kleiner sind als der angegebene Wert. Als Stichprobe dienen auch hier mindestens 500 unterschiedliche Metalleffektpigmente.

Die Bestimmung des Pigmentdurchmessers dso erfolgt durch Ausmessen auf Grundlage von Laserlichtbeugung gemäß DIN ISO 13320:2020-01 unter Verwendung eines kommerziell erhältlichen Partikelgrößenanalysators der Firma Sympatec GmbH, Clausthal-Zellerfeld, Deutschland.

Aus der mittleren Pigmentdicke und dem Pigmentdurchmesser dso lässt sich schließlich das Aspektverhältnis der Metalleffektpigmente bestimmen. Das Aspektverhältnis, also das Verhältnis von Pigmentdurchmesser dso zu mittlerer Pigmentdicke, beträgt bevorzugt mindestens 3:1, beispielsweise mindestens 4:1 oder mindestens 5:1. Ein großes Aspektverhältnis fördert die Ausrichtung der Metalleffektpigmente beim Applizieren der Lackformulierung auf die Oberfläche des Fahrzeugs, was sich insbesondere vorteilhaft auf das Deckvermögen der aus der Lackformulierung hervorgehenden Fahrzeuglackierung auswirkt.

Bedingt durch die vorstehenden spezifischen geometrischen Eigenschaften der Metalleffektpigmente weist die aus der Lackformulierung hervorgehende Fahrzeuglackierung neben einer ausreichend hohen Reflektivität gegenüber Lichtwellen und einer ausreichend hohen Transmission gegenüber Funkwellen auch eine ausreichend hohe Helligkeit und eine ausreichend hohe Buntheit mit einem ausreichend hohen Helligkeitsflop bei einem ausreichend hohen Deckvermögen auf. Wie von Seiten der Erfinder überraschenderweise herausgefunden wurde, ist hierfür insbesondere die geringe Dickenschwankung, ausgedrückt durch eine relative Standardabweichung der mittleren Pigmentdicke von höchstens 40%, bevorzugt höchstens 20% und noch mehr bevorzugt höchstens 10%, der in der Lackformulierung enthaltenen Metalleffektpigmente verantwortlich.

Da sich die zumindest eine dielektrische Schicht, was ihre Schichtdicke anbelangt, mit hoher Präzision auf das Metallsubstrat aufbringen lässt, hängt die Dickenschwankung der Metalleffektpigmente in erster Linie von der Dickenschwankung der bei ihrer Herstellung eingesetzten Metallsubstrate ab. Bei Metallsubstraten mit geringer Dickenschwankung werden nach dem Aufbringen der zumindest einen dielektrischen Schicht folglich auch Metalleffektpigmente mit geringer Dickenschwankung erhalten. Dies gilt auch, wenn auf der zumindest einen dielektrischen Schicht noch eine Oberflächenbeschichtung aufgebracht wird. Umgekehrt führen Metallsubstrate mit großer Dickenschwankung zu Metalleffektpigmenten mit großer Dickenschwankung. Unterschiede in der Dicke der Metallsubstrate werden gewissermaßen in die darauf aufgebrachte zumindest eine dielektrische Schicht und die gegebenenfalls darauf aufgebrachte Oberflächenbeschichtung übertragen.

Um der relativen Standardabweichung der mittleren Pigmentdicke von höchstens 40%, bevorzugt höchstens 20% und noch mehr bevorzugt höchstens 10% zu genügen, müssen bei der Herstellung der Metalleffektpigmente demnach Metallsubstrate mit einer möglichst geringen Dickenschwankung eingesetzt werden.

Metallsubstrate mit einer möglichst geringen Dickenschwankung lassen sich beispielsweise durch Vakuummetallisieren erhalten. Beim Vakuummetallisieren handelt es sich um eine spezielle Form der physikalischen Gasphasenabscheidung ("physical vapor deposition", abgekürzt als PVD). Hierzu wird eine Trägerfolie mit einem Metall wie beispielsweise Aluminium im Hochvakuum bedampft, um so eine dünne Metallschicht mit einer Dicke im Nanometerbereich auf der Trägerfolie zu erzeugen. Die Metallschicht wird sodann unter Zuhilfenahme von Lösungsmitteln von der Trägerfolie abgelöst, wobei sie durch die hierbei auftretenden Scherkräfte zu Plättchen zerkleinert wird. Um die Ablösung zu erleichtern, kann vor dem Bedampfen eine Trennbeschichtung auf die Trägerfolie aufgebracht werden. Durch Vakuummetallisieren erhaltene Metallsubstrate zeichnen sich durch eine besonders geringe Dicke aus. Entsprechend ist auch ihre Dickenschwankung besonders gering, weswegen hieraus hergestellte Metalleffektpigmente der relativen Standardabweichung der mittleren Pigmentdicke von höchstens 40%, bevorzugt höchstens 20% und noch mehr bevorzugt höchstens 10% genügen.

Metallsubstrate, welche demgegenüber durch Nassmahlen erhalten werden, weisen hingegen eine deutlich ausgeprägtere Dickenschwankung auf, was wiederum zu einer deutlich größeren relativen Standardabweichung der mittleren Pigmentdicke führt. Ihrem Erscheinungsbild entsprechend werden durch Nassmahlen erhaltene Metallsubstrate mithin auch als "cornflakes" oder "silver dollars" bezeichnet. Während Metallsubstrate vom "cornflake"-Typ, welcher auch als lamellarer Typ bezeichnet wird, unregelmäßige und gezackte Seitenkanten aufweisen, sind diese bei Metallsubstraten vom "silver dollar"-Typ, welcher auch als lentikularer Typ bezeichnet wird, zumeist abgerundet. Durch Vakuummetallisieren erhaltene Metallsubstrate, welche auch als "vacuum metallized pigments", abgekürzt als VMPs, bezeichnet werden, stellen hingegen Vielecke mit geraden Seitenkanten dar. Neben ihrer besonders geringen Dickenschwankung weisen sie zudem eine deutlich glattere Oberfläche im Vergleich zu Metallsubstraten vom "cornflake"-Typ und vom "silver dollar"-Typ auf. In einer bevorzugten Ausführungsform ist das Metallsubstrat ein durch Vakuummetallisieren erhaltenes Metallsubstrat.

Die Lackformulierung, wie sie gemäß der vorliegenden Erfindung zum Lackieren eines mit einem Radarsensor und einem Lidarsensor ausgestatteten Fahrzeugs verwendet wird, kann ein Gemisch aus zwei oder mehreren der Metalleffektpigmente enthalten. Wenn vorliegend von Metalleffektpigmenten die Rede ist, sind immer solche gemeint, welche die vorstehenden spezifischen geometrischen Eigenschaften, insbesondere eine geringe Dickenschwankung, aufweisen. Durch den Einsatz eines Gemisches aus zwei oder mehreren der Metalleffektpigmente sind auch solche Farbtöne zugänglich, die sich nicht ohne weiteres durch den Einsatz nur eines einzigen Metalleffektpigments erhalten lassen. Zu diesem Zweck kann die Lackformulierung neben den Metalleffektpigmenten auch mindestens ein weiteres Pigment enthalten, darunter glimmer- oder glasbasierte Perlglanzpigmente. Die in der Lackformulierung enthaltenen Pigmente können jedoch auch auf Metalleffektpigmente beschränkt sein, d.h. die Lackformulierung enthält dann keine weiteren Pigmente neben den Metalleffektpigmenten. Insbesondere enthält die Lackformulierung vorzugsweise keine organischen oder anorganischen Absorptionspigmente wie etwa Ruß oder allenfalls einen geringen Anteil hiervon. Wie bereits eingangs erwähnt, geht der Zusatz von Ruß mit einem Verlust der Helligkeit einher. Auch verringert sich die Reflektivität gegenüber Lichtwellen, was sich nachteilig auf die Messgenauigkeit des Lidarsensors auswirkt. Aufgrund ihres ausreichend hohen Deckvermögens, auf das weiter unten noch näher eingegangen wird, ist der Zusatz von Ruß oder dergleichen in der Lackformulierung, wie sie gemäß der vorliegenden Erfindung verwendet wird, nicht oder allenfalls in geringem Maße erforderlich.

Abgesehen von den Pigmenten enthält die Lackformulierung ein Bindemittel sowie ein Lösungsmittel, wobei noch weitere Komponenten wie etwa Füllstoffe und/oder Hilfsstoffe in der Lackformulierung enthalten sein können. Typische Bindemittel und Lösungsmittel sowie Füllstoffe und Hilfsstoffe jeglicher Art sind dem Fachmann bekannt. Als beispielhafter Füllstoff sind hier Plättchen aus Calciumcarbonat (CaCO₃) genannt. Beispielhafte Hilfsstoffe sind Entschäumer, Netzmittel, Lichtstabilisatoren und Verlaufsmittel.

Durch Verdampfen des Lösungsmittels nach Applizieren der Lackformulierung auf die Oberfläche des Fahrzeugs geht aus der Lackformulierung schließlich die Fahrzeuglackierung hervor. Das Applizieren der Lackformulierung ist nicht auf ein besonderes Verfahren beschränkt. Zweckmäßigerweise erfolgt es durch Aufspritzen oder -sprühen mit einem Druckzerstäuber, wobei durch die Dauer der Applikation die Schichtdicke der aus der Lackformulierung hervorgehenden Fahrzeuglackierung eingestellt werden kann. Da die Lackformulierung zu einem ausreichend hohen Deckvermögen führt, ist für die Fahrzeuglackierung eine vergleichsweise geringe Schichtdicke ausreichend. Typische Schichtdicken liegen im Bereich von 10 µm bis 30 µm,wobei grundsätzlich auch geringere Schichtdicken in Frage kommen, solange das Deckvermögen ausreichend hoch ist. Beispielhaft ist hier eine Schichtdicke von 14 µm genannt. Die Schichtdicke meint hier stets die Schichtdicke der Fahrzeuglackierung, welche gegenüber der Schichtdicke der Lackformulierung durch Trocknung des darin enthaltenen Lösungsmittels und gegebenenfalls durch Verfilmung verringert ist.

Die Pigmentmassenkonzentration der Metalleffektpigmente in der Lackformulierung liegt typischerweise im Bereich von 1 Massen-% bis 15 Massen-%, ohne jedoch hierauf beschränkt zu sein. Unter der Pigmentmassenkonzentration ist der Massenanteil der Metalleffektpigmente in Bezug auf die Gesamttrockenmasse der Lackformulierung zu verstehen. Die Gesamttrockenmasse umfasst neben der Masse der Metalleffektpigmente die Massen aller anderen nicht-flüchtigen Bestandteile. Hierbei gilt, dass je größer die Pigmentmassenkonzentration ist, desto höher ist das Deckvermögen bei gleicher Schichtdicke der Fahrzeuglackierung.

Die Lackformulierung, wie sie gemäß der vorliegenden Erfindung zum Lackieren eines mit einem Radarsensor und einem Lidarsensor ausgestatteten Fahrzeugs verwendet wird, weist ein ausreichend hohes Deckvermögen auf. Typischerweise beträgt bei einer Schichtdicke der aus der Lackformulierung hervorgehenden Fahrzeuglackierung von 14 µm und bei einer Pigmentmassenkonzentration der Metalleffektpigmente in der Lackformulierung im Bereich von 1 Massen-% bis 15 Massen-% der Farbabstand ΔE110° höchstens 1,5, bevorzugt höchstens 1,2 und noch mehr bevorzugt höchstens 1,0. Der Farbabstand ΔE110° ist ein Maß für das Deckvermögen, wobei ein kleinerer Farbabstand ein höheres Deckvermögen bedeutet. Vorliegend werden Lackierungen bei einem Farbabstand ΔE110° von höchstens 1,5 als deckend bezeichnet.

Um das Deckvermögen zu bestimmen, wird die Lackformulierung auf ein schwarzweißes Panel appliziert, so dass die aus der Lackformulierung hervorgehende Fahrzeuglackierung eine Schichtdicke von 14 µm aufweist. Der Farbabstand zwischen schwarz und weiß wird sodann in der Geometrie 45°/110° gemäß DIN 6175:2019-07 mit einem kommerziell erhältlichen Mehrwinkel-Spektralphotometer vermessen.

Der Farbton der aus der Lackformulierung hervorgehenden Fahrzeuglackierung hängt in erster Linie von der Koloristik der in der Lackformulierung enthaltenen Metalleffektpigmente ab, kann jedoch durch den Zusatz von weiteren Pigmenten, etwa glimmeroder glasbasierten Perlglanzpigmenten wie auch organischen oder anorganischen Absorptionspigmenten, beeinflusst werden. Dies gilt auch für die Helligkeit und die Buntheit sowie für den Helligkeitsflop. Beispielhafte Werte für den Farbton (Hue) Hᵤᵥ15°, welcher auch als Bunttonwinkel bezeichnet wird, liegen im Bereich von 25 bis 50, was typisch für Rot-, Orange- oder Goldtöne ist. Der Farbton ist jedoch keineswegs hierauf beschränkt. Entsprechend kann der Bunttonwinkel auch außerhalb des Bereichs von 25 bis 50 liegen. Was die Helligkeit und die Buntheit anbelangt, beträgt die Helligkeit (Lightness) L*15° typischerweise mindestens 100 und beträgt die Buntheit (Chroma) Cᵤᵥ15° typischerweise mindestens 150. Der Helligkeitsflop, ausgedrückt als Flop-Index FI nach Alman, beträgt typischerweise mindestens 20.

Zur Bestimmung des Farbtons, der Helligkeit, der Buntheit und des Helligkeitsflops wird die Lackformulierung auf einen schwarzen Untergrund appliziert. Anschließend wird die spektrale Reflexion eines unter einem Winkel von 45° auf die Messoberfläche einfallenden, von einer D65-Lichtquelle abgestrahlten Lichtbündels bei sechs verschiedenen Detektionswinkeln (-15°, 15°, 25°, 45°, 75° und 110°) für einen 10°-Beobachter gemäß DIN EN ISO 18314-3:2018-12 mit einem kommerziell erhältlichen Mehrwinkel-Spektralphotometer vermessen und in die entsprechenden Größen des CIELAB- und CIEHLC-Farbraums umgerechnet. Als kommerziell erhältliches Mehrwinkel-Spektralphotometer kommt hier das Gerät "BYK-mac i MetallicColor" der Firma BYK-Gardner GmbH, Geretsried, Deutschland zum Einsatz, welches auch für die Bestimmung des Farbabstands ΔE110° verwendet wird. Der Flop-Index FI nach Alman berechnet sich in Übereinstimmung mit A. B. J. Rodrigues, "Metallic flop and its measurement", J. Oil Colour Chem. Assoc. 1992, 75(4), 150-153.

Die Lackformulierung, wie sie gemäß der vorliegenden Erfindung zum Lackieren eines mit einem Radarsensor und einem Lidarsensor ausgestatteten Fahrzeugs verwendet wird, weist eine ausreichend hohe Reflektivität gegenüber Lichtwellen und eine ausreichend hohe Transmission gegenüber Funkwellen auf. Zur Kennzeichnung der Transmission gegenüber Funkwellen dient vorliegend die dielektrische Konstante, welche auch als Permittivität ε bezeichnet wird, wie dies auch in F. Pfeiffer, "Analyse und Optimierung von Radomen für automobile Radarsensoren", Dissertation, TU München, 2009, beschrieben ist. Hierbei gilt, dass je kleiner die Permittivität ε ist, desto weniger werden die Funkwellen gedämpft. Typischerweise weist die aus der Lackformulierung hervorgehende Fahrzeuglackierung eine Permittivität ε von höchstens 30, bevorzugt höchstens 20 und noch mehr bevorzugt höchstens 10 im Frequenzbereich von 76 GHz bis 81 GHz auf. Bei einer derartigen Permittivität ist die Lackformulierung für die Verwendung zur Lackierung eines Fahrzeugs, welches mit einem Radarsensor ausgestattet ist, besonders geeignet. Zudem weist die aus der Lackformulierung hervorgehende Fahrzeuglackierung typischerweise eine Reflektivität R von mindestens 50%, bevorzugt mindestens 60% und noch mehr bevorzugt mindestens 70% bei einer Wellenlänge von 905 nm auf. Bei einer derartigen Reflektivität ist die Lackformulierung für die Verwendung zur Lackierung eines Fahrzeugs, welches mit einem Lidarsensensor ausgestattet ist, besonders geeignet.

Die Permittivität ε im Frequenzbereich von 76 GHz bis 81 GHz wird mit Hilfe eines kommerziell erhältlichen Radom-Scanners bestimmt. Nach erfolgter Kalibrierung werden die eingesetzten Messplatten aus Polycarbonat, welche eine Dicke von 2 mm aufweisen, vor und nach dem Applizieren der Lackformulierung vermessen. In beiden Fällen erfolgt die Einstrahlung der Funkstrahlen senkrecht zur Oberfläche der Messplatten. Aus den gemessenen Werten lässt sich schließlich die Permittivität ε ermitteln, wobei sie über den vorliegend gewählten Frequenzbereich konstant ist. Als kommerziell erhältlicher Radom-Scanner kommt hier das Gerät "Radome Measurement System" der Firma perisens GmbH, Feldkirchen bei München, Deutschland zum Einsatz. Die Bestimmung der Reflektivität R erfolgt in analoger Weise bei einer Wellenlänge von 905 nm durch Einstrahlung der Lichtwellen senkrecht zur Messoberfläche.

Die Lackformulierung lässt sich vorteilhafterweise für die Lackierung von Kraftfahrzeugen, insbesondere selbstfahrenden Kraftfahrzeugen, verwenden, welche mit einem Radarsensor und einem Lidarsensor ausgestattet sind. Grundsätzlich lässt sich jedoch jedwedes Fahrzeug mit der Lackformulierung, wie sie gemäß der vorliegenden Erfindung verwendet wird, lackieren.

Die gemäß der vorliegenden Erfindung verwendete Lackformulierung erlaubt das kostengünstige Lackieren eines mit einem Radarsensor und einem Lidarsensor ausgestatteten Fahrzeugs, wobei die aus der Lackformulierung hervorgehende Fahrzeuglackierung neben einer ausreichend hohen Reflektivität gegenüber Lichtwellen und einer ausreichend hohen Transmission gegenüber Funkwellen auch durch eine ausreichend hohe Helligkeit und durch eine ausreichend hohe Buntheit mit einem ausreichend hohen Helligkeitsflop bei einem ausreichend hohen Deckvermögen gekennzeichnet ist. Die gemäß der vorliegenden Erfindung verwendete Lackformulierung genügt damit den Anforderungen an eine Lackformulierung im Hinblick auf deren Verwendung zum Lackieren eines mit einem Radarsensor und einem Lidarsensor ausgestatteten Fahrzeugs, ohne sich nachteilig auf die Koloristik und das Deckvermögen auszuwirken.

### Beispiele

Die nachstehenden Beispiele dienen der weiteren Erläuterung der vorliegenden Erfindung, ohne jedoch hierauf beschränkt zu sein.

Es wurden Lackformulierungen mit den in Tabelle 1 aufgelisteten Metalleffektpigmenten, bezeichnet als Pigmente a bis e, welche allesamt kommerziell erhältlich sind, angesetzt.

Pigmente a und b stammen von der Firma Schlenk Metallic Pigments GmbH, Roth, Deutschland, und Pigmente c, d und e stammen von der Firma BASF Colors & Effects GmbH, Ludwigshafen, Deutschland. Die Metalleffektpigmente sind in Tabelle 1 zusammen mit der mittleren Pigmentdicke und der absoluten Standardabweichung der mittleren Pigmentdicke, bestimmt in Übereinstimmung mit dem zuvor genannten Messverfahren, sowie mit der hieraus erhältlichen relativen Standardabweichung der mittleren Pigmentdicke angegeben. Die Metalleffektpigmente aus Tabelle 1 umfassen durchweg ein Metallsubstrat aus Aluminium. Im Falle von Pigmenten a und b wird das Metallsubstrat aus Aluminium durch Vakuummetallisieren erhalten, während es im Falle von Pigmenten c, d und e durch Nassmahlen erhalten wird. Bei Pigmenten c und d ist das Metallsubstrat aus Aluminium vom "cornflake"-Typ, während es bei Pigment e vom "silver dollar"-Typ ist.

**Tabelle 1**

| Pigment | | mittlere Pigmentdicke (nm) | absolute Standardabweichung der mittleren Pigmentdicke (nm) | relative Standardabweichung der mittleren Pigmentdicke (%) |
|---|---|---|---|---|
| a | Zenexo^{®} WB 21 OO | 335 | 19 | 5,7 |
| b | Zenexo^{®} WB 21 YY | 327 | 20 | 6,1 |
| c | Paliocrom^{®} L2800 | 338 | 188 | 55,6 |
| d | Paliocrom^{®} L2020 | 297 | 202 | 68,0 |
| e | Paliocrom^{®} L2854 | 434 | 230 | 53,0 |

Zum Ansetzen der Lackformulierungen wurden die Metalleffektpigmente aus Tabelle 1 in einem Lacksystem (Einkomponentenlack auf Basis von Celluloseacetobutyrat, lösungsmittelhaltig) dispergiert. In den jeweiligen Lackformulierungen lagen die eingesetzten Metallinferenzpigmente entweder einzeln als Purton oder im Gemisch sowie gegebenenfalls zusammen mit einer Rußpaste (Helio Beit^{®} UN 907 der Firma Helio Beit Pigmentpasten GmbH, Köln, Deutschland) und/oder einer roten Pigmentpaste (Hostatint^{®} Red A-P2Y 100-ST der Firma Clariant AG, Muttenz, Schweiz) als weiteres Pigment bzw. als weitere Pigmente vor.

Nach Ansetzen der Lackformulierungen wurden diese auf die Messplatten aus Polycarbonat durch Aufspritzen appliziert, so dass nach Verdampfen des Lösungsmittels jeweils Lackierungen mit einer Schichtdicke von 14 µm erhalten wurden. Die Lackierungen wurden anschließend im Hinblick auf ihre Transmission bzw. Reflektivität gegenüber Funk- bzw. Lichtwellen sowie im Hinblick auf ihre Koloristik und ihr Deckvermögen näher untersucht. Die entsprechenden Größen wurden dabei in Übereinstimmung mit den zuvor genannten Messverfahren bestimmt.

### Beispiele 1 bis 4:

### Lackierung mit Orangeton im Bunttonwinkelbereich Hᵤᵥ15° von 33 bis 35

Tabelle 2 gibt für die jeweiligen Lackierungen neben der Pigmentmassenkonzentration PMK_{Pigment} der eingesetzten Metalleffektpigmente auch die Pigmentmassenkonzentration PMK_{w.Pigment} des weiteren Pigments, falls vorhanden, an. Daneben enthält Tabelle 2 für die jeweiligen Lackierungen die ermittelten Werte für die Permittivität ε im Frequenzbereich von 76 GHz bis 81 GHz, die Reflektivität R bei einer Wellenlänge von 905 nm, den Farbton Huv15°, die Helligkeit L*15°, die Buntheit Cuv15°, den Flop-Index FI nach Alman und den Farbabstand ΔE110°.

**Tabelle 2**

| Bsp. | Pigment | PMK_{Pigment} (Massen-%) | PMK_{w.Pigment*} (Massen-%) | ε | R (%) | Hᵤᵥ15° | L*15° | Cᵤᵥ15° | FI | ΔE110° |
|---|---|---|---|---|---|---|---|---|---|---|
| 1 | a | 12 | - | 30,0 | 55,6 | 34,8 | 110,6 | 192,8 | 24,5 | 1,5 |
| 2 | c | 12 | - | 30,0 | 49,4 | 33,2 | 94,0 | 172,7 | 17,1 | 2,4 |
| 3 | c | 13,42 | - | 34,4 | 50,6 | 33,2 | 95,0 | 172,6 | 16,9 | 1,5 |
| 4 | c | 12 | 0,138 | 29,6 | 47,4 | 33,3 | 96,0 | 164,6 | 17,2 | 1,5 |

| | | | | | | | | | | |
|---|---|---|---|---|---|---|---|---|---|---|
| * Als weiteres Pigment diente hier die vorstehend genannte Rußpaste. | | | | | | | | | | |

Der Bunttonwinkel Hᵤᵥ15° im Bereich von 33 bis 35, welcher einem Orangeton entspricht, rührte nahezu ausschließlich von den eingesetzten Metalleffektpigmente her.

In Beispiel 1 mit Pigment a war bei einer Schichtdicke von 14 µm zum Erreichen eines deckenden Zustands eine Pigmentmassenkonzentration PMK_{Pigment} von 12 Massen-% erforderlich.

In Beispiel 2 mit Pigment c (nicht-erfindungsgemäß) betrug bei gleicher Schichtdicke die Pigmentmassenkonzentration PMK_{Pigment} ebenfalls 12 Massen-%. Es wurde jedoch kein deckender Zustand erreicht. Auch war der Flop-Index FI nach Alman reduziert.

In Beispiel 3 mit Pigment c (nicht-erfindungsgemäß) wurde bei gleicher Schichtdicke die Pigmentmassenkonzentration PMK_{Pigment} auf 13,42 Massen-% erhöht, so dass ein deckender Zustand erreicht wurde. Allerdings stieg hierdurch die Permittivität ε im Frequenzbereich von 76 GHz bis 81 GHz auf einen Wert von über 30 an.

In Beispiel 4 mit Pigment c (nicht-erfindungsgemäß) wurde demgegenüber Rußpaste zum Erreichen eines deckenden Zustands zugesetzt. Wie aus einem Vergleich mit Beispiel 1 deutlich wird, ging dies jedoch zulasten der Koloristik. Auch fiel hierdurch die Reflektivität R bei einer Wellenlänge von 905 nm auf einen Wert von unter 50% ab.

Anhand von Beispielen 1 bis 4 lässt sich schließen, dass lediglich mit der Pigment a enthaltenden Lackformulierung eine Fahrzeuglackierung erhalten werden kann, welche neben einer ausreichend hohen Reflektivität gegenüber Lichtwellen und einer ausreichend hohen Transmission gegenüber Funkwellen auch durch eine ausreichend hohe Helligkeit und durch eine ausreichend hohe Buntheit mit einem ausreichend hohen Helligkeitsflop bei einem ausreichend hohen Deckvermögen gekennzeichnet ist.

### Beispiele 5 bis 8:

### Lackierung mit Orangeton im Bunttonwinkelbereich Hᵤᵥ15° von 33 bis 35

Tabelle 3 gibt für die jeweiligen Lackierungen neben der Pigmentmassenkonzentration PMK_{Pigment} der eingesetzten Metalleffektpigmente auch die Pigmentmassenkonzentration PMK_{w.Pigment} des weiteren Pigments, falls vorhanden, an. Daneben enthält Tabelle 3 für die jeweiligen Lackierungen die ermittelten Werte für die Permittivität ε im Frequenzbereich von 76 GHz bis 81 GHz, die Reflektivität R bei einer Wellenlänge von 905 nm, den Farbton Huv15°, die Helligkeit L*15°, die Buntheit Cuv15°, den Flop-Index FI nach Alman und den Farbabstand ΔE110°.

**Tabelle 3**

| Bsp. | Pigment | PMK_{Pigment} (Massen-%) | PMK_{w.Pigment*} (Massen-%) | ε | R (%) | Hᵤᵥ15° | L*15° | Cᵤᵥ15° | FI | ΔE110° |
|---|---|---|---|---|---|---|---|---|---|---|
| 5 | a | 12 | - | 30,0 | 55,6 | 34,8 | 110,6 | 192,8 | 24,5 | 1,5 |
| 6 | e | 12 | - | 18,0 | 47,4 | 33,4 | 93,0 | 174,0 | 19,3 | 16,1 |
| 7 | e | 19,03 | - | 32,2 | 56,8 | 33,4 | 100,2 | 110,7 | 18,0 | 0,4 |
| 8 | e | 11,16 | 0,657 | 17,0 | 36,0 | 33,8 | 80,3 | 137,3 | 21,6 | 1,5 |

| | | | | | | | | | | |
|---|---|---|---|---|---|---|---|---|---|---|
| * Als weiteres Pigment diente hier die vorstehend genannte Rußpaste. | | | | | | | | | | |

Der Bunttonwinkel Hᵤᵥ15° im Bereich von 33 bis 35, welcher einem Orangeton entspricht, rührte nahezu ausschließlich von den eingesetzten Metalleffektpigmente her.

In Beispiel 5 mit Pigment a war bei einer Schichtdicke von 14 µm zum Erreichen eines deckenden Zustands eine Pigmentmassenkonzentration PMK_{Pigment} von 12 Massen-% erforderlich. Beispiel 5 ist mit Beispiel 1 identisch.

In Beispiel 6 mit Pigment e (nicht-erfindungsgemäß) betrug bei gleicher Schichtdicke die Pigmentmassenkonzentration PMK_{Pigment} ebenfalls 12 Massen-%. Es wurde jedoch kein deckender Zustand erreicht. Auch war der Flop-Index FI nach Alman reduziert. In Beispiel 7 mit Pigment e (nicht-erfindungsgemäß) wurde bei gleicher Schichtdicke die Pigmentmassenkonzentration PMK_{Pigment} auf 19,03 Massen-% erhöht, so dass ein deckender Zustand erreicht wurde. Allerdings stieg hierdurch die Permittivität ε im Frequenzbereich von 76 GHz bis 81 GHz auf einen Wert von über 30 an.

In Beispiel 8 mit Pigment e (nicht-erfindungsgemäß) wurde demgegenüber Rußpaste zum Erreichen eines deckenden Zustands zugesetzt. Wie aus einem Vergleich mit Beispiel 5 deutlich wird, ging dies jedoch zulasten der Koloristik. Auch fiel hierdurch die Reflektivität R bei einer Wellenlänge von 905 nm auf einen Wert von unter 50% ab.

Anhand von Beispielen 5 bis 8 lässt sich schließen, dass lediglich mit der Pigment a enthaltenden Lackformulierung eine Fahrzeuglackierung erhalten werden kann, welche neben einer ausreichend hohen Reflektivität gegenüber Lichtwellen und einer ausreichend hohen Transmission gegenüber Funkwellen auch durch eine ausreichend hohe Helligkeit und durch eine ausreichend hohe Buntheit mit einem ausreichend hohen Helligkeitsflop bei einem ausreichend hohen Deckvermögen gekennzeichnet ist.

### Beispiele 9 bis 12:

### Lackierung mit Goldton im Bunttonwinkelbereich Hᵤᵥ15° von 47 bis 48

Tabelle 4 gibt für die jeweiligen Lackierungen neben der Pigmentmassenkonzentration PMK_{Pigment} der eingesetzten Metalleffektpigmente auch die Pigmentmassenkonzentration PMK_{w.Pigment} des weiteren Pigments, falls vorhanden, an. Daneben enthält Tabelle 4 für die jeweiligen Lackierungen die ermittelten Werte für die Permittivität ε im Frequenzbereich von 76 GHz bis 81 GHz, den Farbton Hᵤᵥ15°, die Helligkeit L*15°, die Buntheit Cᵤᵥ15°, den Flop-Index FI nach Alman und den Farbabstand ΔE110°.

**Tabelle 4**

| Bsp. | Pigment | PMK_{Pigment} (Massen-%) | PMK_{w.Pigment*} (Massen-%) | ε | Hᵤᵥ15° | L*15° | Cᵤᵥ15° | FI | ΔE110° |
|---|---|---|---|---|---|---|---|---|---|
| 9 | a und b | 6,865 | - | 30,0 | 47,5 | 127,1 | 150,6 | 28,1 | 1,2 |
| 10 | d | 6,865 | - | 22,0 | 47,8 | 104,9 | 119,8 | 17,4 | 5,3 |
| 11 | d | 11,637 | - | 48,0 | 47,8 | 108,8 | 124,4 | 16,1 | 1,2 |
| 12 | d | 6,865 | 0,196 | 22,0 | 47,7 | 95,3 | 109,9 | 17,1 | 1,2 |

| | | | | | | | | | |
|---|---|---|---|---|---|---|---|---|---|
| * Als weiteres Pigment diente hier die vorstehend genannte Rußpaste. | | | | | | | | | |

Der Bunttonwinkel Hᵤᵥ15° im Bereich von 47 bis 48, welcher einem Goldtton entspricht, rührte nahezu ausschließlich von den eingesetzten Metalleffektpigmente her.

In Beispiel 9 mit Pigmenten a und b war bei einer Schichtdicke von 14 µm zum Erreichen eines deckenden Zustands eine Pigmentmassenkonzentration PMK_{Pigment} von 6,865 Massen-% erforderlich. Pigmente a und b lagen in einem Massenverhältnis von 50:50 vor.

In Beispiel 10 mit Pigment d (nicht-erfindungsgemäß) betrug bei gleicher Schichtdicke die Pigmentmassenkonzentration PMK_{Pigment} ebenfalls 6,865 Massen-%. Es wurde jedoch kein deckender Zustand erreicht. Auch war der Flop-Index FI nach Alman reduziert.

In Beispiel 11 mit Pigment d (nicht-erfindungsgemäß) wurde bei gleicher Schichtdicke die Pigmentmassenkonzentration PMK_{Pigment} auf 11,637 Massen-% erhöht, so dass ein deckender Zustand erreicht wurde. Allerdings stieg hierdurch die Permittivität ε im Frequenzbereich von 76 GHz bis 81 GHz auf einen Wert von über 30 an.

In Beispiel 12 mit Pigment d (nicht-erfindungsgemäß) wurde demgegenüber Rußpaste zum Erreichen eines deckenden Zustands zugesetzt. Wie aus einem Vergleich mit Beispiel 9 deutlich wird, ging dies jedoch zulasten der Koloristik.

Anhand von Beispielen 9 bis 12 lässt sich schließen, dass lediglich mit der Pigmente a und b enthaltenden Lackformulierung eine Fahrzeuglackierung erhalten werden kann, welche neben einer ausreichend hohen Transmission gegenüber Funkwellen auch durch eine ausreichend hohe Helligkeit und durch eine ausreichend hohe Buntheit mit einem ausreichend hohen Helligkeitsflop bei einem ausreichend hohen Deckvermögen gekennzeichnet ist.

### Beispiele 13 bis 16:

### Lackierung mit Rotton im Bunttonwinkelbereich Hᵤᵥ15° von 27 bis 28

Tabelle 5 gibt für die jeweiligen Lackierungen neben der Pigmentmassenkonzentration PMK_{Pigment} der eingesetzten Metalleffektpigmente auch die Pigmentmassenkonzentration PMK_{w.Pigment} des weiteren Pigments bzw. der weiteren Pigmente, falls vorhanden, an. Daneben enthält Tabelle 5 für die jeweiligen Lackierungen die ermittelten Werte für die Permittivität ε im Frequenzbereich von 76 GHz bis 81 GHz, die Reflektivität R bei einer Wellenlänge von 905 nm, den Farbton Hᵤᵥ15°, die Helligkeit L*15°, die Buntheit Cᵤᵥ15°, den Flop-Index FI nach Alman und den Farbabstand ΔE110°.

**Tabelle 5**

| Bsp. | Pigment | PMK_{Pigment} (Massen-%) | PMK_{w.Pigment*} (Massen-%) | | ε | R (%) | Hᵤᵥ15° | L*15° | Cᵤᵥ15° | FI | ΔE110° |
|---|---|---|---|---|---|---|---|---|---|---|---|
| 13 | a | 12,052 | - | 1,65 | 30,0 | 55,0 | 27,5 | 99,7 | 206,9 | 25,2 | 1,3 |
| 14 | a | 8,683 | 0,256 | 1,686 | 20,0 | 46,7 | 27,5 | 91,8 | 190,0 | 27,0 | 1,5 |
| 15 | e | 13,186 | 0,501 | 1,515 | 20,0 | 40,6 | 27,5 | 76,9 | 154,2 | 21,2 | 1,3 |
| 16 | c | 6,538 | 0,594 | 1,416 | 14,0 | 34,9 | 27,5 | 70,0 | 142,7 | 20,0 | 1,3 |

| | | | | | | | | | | | |
|---|---|---|---|---|---|---|---|---|---|---|---|
| * Als weitere Pigmente dienten hier die vorstehend genannte Rußpaste sowie die vorstehend genannte rote Pigmentpaste. Die Werte in der linken Hälfte der Spalte stellen jeweils die Pigmentmassenkonzentration der Rußpaste dar, während die Werte in der rechten Hälfte der Spalte jeweils die Pigmentmassenkonzentration der roten Pigmentpaste darstellen. | | | | | | | | | | | |

Der Bunttonwinkel Hᵤᵥ15° im Bereich von 27 bis 28, welcher einem Rotton entspricht, rührte von der Kombination der eingesetzten Metalleffektpigmente mit der roten Pigmentpaste her.

In Beispiel 13 mit Pigment a war bei einer Schichtdicke von 14 µm zum Erreichen eines deckenden Zustands eine Pigmentmassenkonzentration PMK_{Pigment} von 12,052 Massen-% erforderlich.

In Beispiel 14 mit Pigment a wurde bei gleicher Schichtdicke die Pigmentmassenkonzentration PMK_{Pigment} verringert. Um einen deckenden Zustand zu erreichen, wurde Rußpaste zugesetzt. Wie aus einem Vergleich mit Beispiel 13 deutlich wird, ging dies jedoch zulasten der Koloristik. Auch fiel hierdurch die Reflektivität R bei einer Wellenlänge von 905 nm auf einen Wert von unter 50% ab.

In Beispiel 15 mit Pigment e (nicht-erfindungsgemäß) und Beispiel 16 mit Pigment c (nicht-erfindungsgemäß) musste bei gleicher Schichtdicke erheblich mehr Rußpaste zugesetzt werden, um einen deckenden Zustand zu erreichen. Wie aus einem Vergleich mit Beispiel 13 deutlich wird, ging dies jedoch zulasten der Koloristik. Auch fiel hierdurch die Reflektivität R bei einer Wellenlänge von 905 nm auf einen Wert von unter 50% ab.

Anhand von Beispielen 13 bis 16 lässt sich schließen, dass lediglich mit der Pigment a enthaltenden Lackformulierung eine Fahrzeuglackierung erhalten werden kann, welche neben einer ausreichend hohen Reflektivität gegenüber Lichtwellen und einer ausreichend hohen Transmission gegenüber Funkwellen auch durch eine ausreichend hohe Helligkeit und durch eine ausreichend hohe Buntheit mit einem ausreichend hohen Helligkeitsflop bei einem ausreichend hohen Deckvermögen gekennzeichnet ist.

## Patentansprüche

1. Verwendung einer Metalleffektpigmente enthaltenden Lackformulierung zum Lackieren eines mit einem Radarsensor und einem Lidarsensor ausgestatteten Fahrzeugs, wobei die Metalleffektpigmente ein Metallsubstrat, das gegebenenfalls passiviert ist und das mit zumindest einer dielektrischen Schicht umhüllt ist, umfassen, wobei die Metalleffektpigmente eine mittlere Pigmentdicke von 20 nm bis 2000 nm aufweisen und die relative Standardabweichung der mittleren Pigmentdicke höchstens 40% beträgt.

2. Verwendung nach Anspruch 1, wobei das Metallsubstrat aus Aluminium ist.

3. Verwendung nach Anspruch 1 oder 2, wobei die zumindest eine dielektrische Schicht aus einem Dielektrikum, ausgewählt aus Siliziumdioxid, Aluminiumoxid, Eisen(III)oxid, Titan(IV)oxid, Zinn(IV)oxid, Chrom(III)oxid und Cobalt(III)oxid, ist.

4. Verwendung nach einem der Ansprüche 1 bis 3, wobei die Metalleffektpigmente Interferenzpigmente sind.

5. Verwendung nach einem der Ansprüche 1 bis 4, wobei die Metalleffektpigmente mit einer Oberflächenbeschichtung versehen sind.

6. Verwendung nach einem der Ansprüche 1 bis 5, wobei die relative Standardabweichung der mittleren Pigmentdicke höchstens 10% beträgt.

7. Verwendung nach einem der Ansprüche 1 bis 6, wobei die Metalleffektpigmente einen Pigmentdurchmesser dso im Bereich von 3 µm bis 100 µm aufweisen.

8. Verwendung nach einem der Ansprüche 1 bis 7, wobei das Metallsubstrat ein durch Vakuummetallisieren erhaltenes Metallsubstrat ist.

9. Verwendung nach einem der Ansprüche 1 bis 8, wobei die Lackformulierung ein Gemisch aus zwei oder mehreren der Metalleffektpigmente enthält.

10. Verwendung nach einem der Ansprüche 1 bis 9, wobei die Lackformulierung neben den Metalleffektpigmenten mindestens ein weiteres Pigment enthält.

11. Verwendung nach einem der Ansprüche 1 bis 10, wobei die Lackformulierung keinen Ruß enthält.

12. Verwendung nach einem der Ansprüche 1 bis 11, wobei bei einer Schichtdicke der aus der Lackformulierung hervorgehenden Fahrzeuglackierung von 14 µm und bei einer Pigmentmassenkonzentration der Metalleffektpigmente in der Lackformulierung im Bereich von 1 Massen-% bis 15 Massen-% der Farbabstand ΔE110° höchstens 1,5 beträgt.

13. Verwendung nach Anspruch 12, wobei die aus der Lackformulierung hervorgehende Fahrzeuglackierung einen Farbton Hᵤᵥ15° im Bereich von 25 bis 50, eine Helligkeit L*15° von mindestens 100, eine Buntheit Cᵤᵥ15° von mindestens 150 und einen Flop-Index FI nach Alman von mindestens 20 aufweist.

14. Verwendung nach Anspruch 12 oder 13, wobei die aus der Lackformulierung hervorgehende Fahrzeuglackierung eine Permittivität ε von höchstens 30 im Frequenzbereich von 76 GHz bis 81 GHz und eine Reflektivität R von mindestens 50% bei einer Wellenlänge von 905 nm aufweist.

15. Verwendung nach einem der Ansprüche 1 bis 14, wobei das Fahrzeug ein Kraftfahrzeug, insbesondere ein selbstfahrendes Kraftfahrzeug, ist.
